# EUROPEAN PATENT APPLICATION

(11) **EP 4 652 853 A1**
(43) Date of publication of application: **26.11.2025**
(21) Application number: 24382558.5
(22) Date of filing: 24.05.2024
(51) Int. Cl.: A23J 3/14, A23J 3/22, A23P 30/20

(54) **PLANT-BASED MEAT AND PROCESS FOR OBTAINING THEREOF**

(71) Applicant: Moa Biotech SL, 31110 Noain, Navarra (ES)
(72) Inventor: Sánchez Gómez, Susana, 31110 Noain (ES); Emparanza García, Bosco, 31110 N (ES); Castander Illarramendi, Kizkitza, 31110 Noain (ES)
(74) Representative: Hoffmann Eitle

(57) **Abstract**

The present invention refers to a process for obtaining plant-based meat without plant flavour off-notes, or with reduced plant flavour off-notes as compared with the plant of origin. The present invention also refers to plant-based meat obtained when the process of the invention is used.

## Description

### FIELD OF THE INVENTION

The present invention refers to the biotech field, particularly applied to the food industry. Specifically, the present invention refers to a process for obtaining plant-based meat without plant flavour off-notes, or with reduced plant flavour off-notes as compared with the plant of origin. The present invention also refers to plant-based meat obtained when the process of the invention is used.

### STATE OF THE ART

The global projections show that feeding a world population of almost 10 billion people in 2050 would require raising overall food production by 70 percent. Currently, this food gap is being related to unsustainable agri-food practices. At the same time, we urgently need to cut greenhouse gas (GHG) emissions from agricultural production and stop conversion of remaining forests to agricultural land. Thus, there is an enormous interest in developing new sources of food, sustainable, nutritional and healthy.

Use of microorganisms as an alternative source of SCP (Single Cell Proteins) arises with great potential due to all the advantages they present, such as their independence from seasonal or climatic factors and the use of facilities in very small areas, which reduces 25 deforestations caused by other alternatives (vegetable and / or animal). In addition, the water consumed, and the CO2 emitted into the atmosphere are reduced compared to animal protein (approximately 98% and 85% respectively). Much of the recent interest in SCP has focused on the valorization of side streams by using microorganisms to improve their protein content, which can then be used in animal feed and human consumption.

Meat analogues, need to mimic certain qualities of meat, and are blends of various protein sources. Texturization processes are used to develop meat analogues from various protein sources to replace animal proteins in human. Extrusion technologies are the most common texturization processes. With these technologies the fibre like structure characteristic of meet can be mimic.

Currently plant-based protein derived meat analogues lead the transition towards a more sustainable food system. While consumers are increasing their awareness of the environmental impact of meat consumption, only a fraction of the population chooses a plant-based diet. The primary factor behind this choice is that existing formulations of plant-based protein-derived alternative meats encounter several challenges, particularly in terms of organoleptic properties. In order to arise the meat consumption, plant-based products should be formulated to mimic meat. The lack of meaty aroma and taste and the off flavours are considered potential constrains for product formulations. A recent survey showed the low consumer acceptance is likely related to the poor sensory properties of plant-based products. Thus, the need of an ingredient that can improve this characteristic is necessary.

The research to mitigate off-flavors in plant-based proteins is of high importance, particularly considering their increasing utilization in food applications. These proteins often exhibit off-notes such as "green," "grassy," or "beany" flavors, alongside persistent bitter and astringent tastes, which represent significant challenges to consumer acceptance and marketability. In addressing this flavor challenge, it's essential to recognize the inherent limitations of synthetic flavoring agents commonly used in food products. Unlike the characteristic flavors of specific types of meat products, synthetic flavorings lack the complexity and richness associated with natural sources. Moreover, synthetic flavorings are short-lived and susceptible to degradation during cooking in extreme conditions, making them incapable of replicating the flavor changes experienced in cooked meats. Importantly, the use of synthetic flavorings may also raise concerns regarding human health, as they have the potential to accumulate in the body over time, leading to the development of toxic compounds such as carcinogens, mutagens, and teratogens.

The present invention is focused on solving the above cited problems and an innovative process for obtaining plant-based meat without plant flavour off-notes, or with reduced plant flavour off-notes as compared with the plant of origin.

### DESCRIPTION OF THE INVENTION

The present invention refers to a process for obtaining plant-based meat without plant flavour off-notes, or with reduced plant flavour off-notes as compared with the plant of origin. The present invention also refers to plant-based meat obtained by using the process of the invention.

Particularly, the inventors of the present invention herein provide an innovative approach aimed at obtaining plant-based meat without plant flavour off-notes, or with reduced plant flavour off-notes as compared with the plant of origin.

So, the first embodiment of the present invention refers to a process (hereinafter *process of the invention*) for obtaining plant-based meat without plant flavour off-notes, or with reduced plant flavour off-notes as compared with the plant of origin; or a process for mitigating or eliminating plant flavour off-notes in meat analogues, which comprises: a) providing a source of plant protein, and b) mixing plant protein with yeast biomass while heat treatment and/or pressure is applied. In other words, step b) comprises extruding a mixture of the plant protein with yeast biomass. Particularly, the process is characterized in that the yeast biomass of step b) is inactivated yeast biomass and fermentation or extraction steps are excluded, so the process is easier and more cost-effective as compared with the state of the art.

Unlike traditional methods that rely on active yeast material or yeast extract, the present invention relies on the use of inactivated yeast biomass. Inactivated yeast biomass refers to yeast cells that have been inactivated through processes like heat treatment or drying, preserving their flavor-enhancing properties while eliminating the need for fermentation or extraction.

While traditional methods require the metabolic activity of living yeast cells to synthesize and excrete aromatic compounds during fermentation, the use of inactivated yeast biomass bypasses this step entirely. Instead, the preserved yeast cells contain a rich reservoir of flavor-enhancing molecules. Manufacturers can harness these compounds to enhance flavor and mask off-notes without the complexities of fermentation or extraction processes.

This innovative method provides a convenient and cost-effective solution for improving sensory profiles in meat analogues products, aligning with consumer preferences for natural, clean-label ingredients and simplified production processes.

The second embodiment of the present invention refers to the use of inactivated yeast biomass for obtaining plant-based meat without plant flavour off-notes; or for mitigating or eliminating plant flavour off-notes in meat analogues.

In a preferred embodiment, the yeasts are inactivated through processes like heat treatment or drying.

In a preferred embodiment, the yeast biomass is added in liquid format.

Surprisingly, the yeast biomass, when added in liquid format, exhibited the same fiber-like structure observed in both with and without yeast material formulations. The preservation of the fiber-like structure in samples containing liquid yeast biomass suggests a remarkable stability in structural integrity, regardless of the physical state of the yeast. This unexpected outcome presents significant advantages from a sustainability perspective, as it eliminates the need for energy-intensive drying steps during processing. Overall, these results highlight the potential of liquid yeast biomass as a sustainable alternative in food processing, offering structural stability without compromising environmental sustainability.

In a preferred embodiment, the plant-based meat is characterized by a statistically significant increase of Retention Index (RI) 900, 948, 995 and/or 1126 and a statistically significant decreased of RI 1500, 1564, 990, 1714 and/or 1723 measured by gas chromatography using DBWax column [d'Acampora Zellner B, Dugo P, Dugo G, Mondello L. Gas chromatography-olfactometry in food flavour analysis. J Chromatogr A. 2008;1186(1-2):123-143. doi:10.1016/j.chroma.2007.09.006]*.*

In a preferred embodiment, the yeast is Crabtree-negative yeast, preferably selected from: *Candida utilis, Kluyveromyces marxianus, Debaryomyces hansenii* or *Yarrowia lipolytica.*

The second embodiment refers to plant-based meat obtained by the process of the invention.

In a preferred embodiment, the plant-based meat is characterized by a statistically significant increase of Retention Index (RI) 900, 948, 995 and/or 1126 and a statistically significant decreased of RI 1500, 1564, 990, 1714 and/or 1723 measured by gas chromatography using DBWax column [d'Acampora Zellner B, Dugo P, Dugo G, Mondello L. Gas chromatography-olfactometry in food flavour analysis. J Chromatogr A. 2008;1186(1-2):123-143. doi:10.1016/j.chroma.2007.09.006].

For the purpose of the present invention the following terms are defined:
- The term "comprising" means including, but not limited to, whatever follows the word "comprising". Thus, use of the term "comprising" indicates that the listed elements are required or mandatory, but that other elements are optional and may or may not be present.
- The term "consisting of" means including, and limited to, whatever follows the phrase "consisting of". Thus, the phrase "consisting of" indicates that the listed elements are required or mandatory, and that no other elements may be present.
- The expression "plant-based meat" refers to meat produced directly from plants. Instead of relying on an animal to convert plants into meat, meat is more efficiently made by skipping the animal and turning plant ingredients directly into meat. Like animal-based meat, plant-based meat is composed of protein, fat, vitamins, minerals, and water [Stephan van Vliet et al., 2020. Plant-Based Meats, Human Health, and Climate Change. REVIEW article. Front. Sustain. Food Syst., 06 October 2020. Sec. Agroecology and Ecosystem Services. Volume 4 - 2020 https://doi.org/10.3389/fsufs.2020.00128].
- The expression "flavour off-notes" are taints in food products caused by the presence of undesirable compounds. They can originate in raw materials, from chemical changes during food processing and storage, and from micro-organisms.
- The expression "inactivated yeast biomass" refers to yeast cells that have been inactivated through processes like heat treatment or drying. It consists of yeast cells that are no longer living or active so they cannot produce any of the effects of live yeast, such as fermentation.
- The expression "yeast biomass in liquid format" just refers to a specific presentation of the yeast biomass. Today, yeast is available in both dried and liquid forms. Liquid format is preferred in the context of the present invention.

### Description of the figures

**Figure 1****.** Visual appearance of the plant-based meat of the invention.
**Figure 2****.** Soy-like taste intensity in HME soy samples.
**Figure 3****.** Umami taste intensity in HME soy samples.
**Figure 4****.** Umami taste intensity in HME pea samples.
**Figure 5****.** Pea-like taste intensity in HME pea samples.
**Figure 6****.** Umami taste intensity in LME pea samples.
**Figure 7****.** Legume taste intensity in LME pea samples.
**Figure 8****.** Green notes in LME pea samples.
**Figure 9****.** Cardboard notes in LME pea samples.

### Detailed description of the figures

The present invention is illustrated by means of the Examples set below, without the intention of limiting its scope of protection.

### Example 1. Materials and methods

### Example 1.1. Materials

Soybean protein concentrate Arcon^{®} SM Soy Protein Concentrat was obtained from ADM (70% protein). Pea protein isolate NUTRALYS^{®} F85M was obtained from Roquette (83% protein). *Saccharomyces cerevisiae* yeast SAF INSTANT ROJA was obtained from Lessafre (43% protein). Inactivated dry yeast biomass *Kluyveromyces marxianus* was produced by MOA FOODTECH (40% protein), named as yeast powder. Inactivated liquid yeast biomass *Kluyveromyces marxianus* was produced by MOA FOODTECH (11% dry matter), named as liquid yeast.

All other chemicals and reagents used for the analysis of odour zones were of analytical grade.

### Example 1.2. Preparation of the extrudates

### Example 1.2.1. High moisture extrusion (HME)

All extrusion experiments were performed using a FKD 1 ZSK27 doble screw extruder (Cooperion) with ten independent heating zones. Yeast powders were added respectively with Soy protein concentrate at concentrations of 0-60% (shown in **Table 1** and **Table 2).** Yeast powders were added with pea protein isolate at concentrations of 0-60%. The mixed material powder blend was fed to extruder at rate 10 kg/h. Water was pumped to the extruder. In one trial the *K.marxianus* yeast biomass **(Table 3)** was incorporated in liquid format with (11% of total dry matter) with a pump directly to the extruder replacing the water pump.

All trials were operated at screw speed of 480-600 rpm. The heating in the different screw zones were between 40-190°C. The cooling die was then opened for samples to be collected at temperature between 40-85°C. Then, the samples were frozen.

**Table 1. Soy formulas for HME. (DM=Dry matter)**

| | % DM yeast powder | % DM soy |
|---|---|---|
| HME_soy1 | 0 | 100 |
| HME_soy2 | 5 | 95 |
| HME_soy3 | 15 | 85 |
| HME_soy4 | 20 | 80 |
| HME_soy5 | 30 | 70 |
| HME_soy6 | 40 | 80 |
| HME_soy7 | 50 | 50 |
| HME_soy8 | 60 | 40 |

**Table 2. Pea formulas for HME. (DM=Dry matter)**

| | % DM yeast powder | % DM pea |
|---|---|---|
| HME_pea1 | 0 | 100 |
| HME_pea2 | 5 | 95 |
| HME_pea3 | 15 | 85 |
| HME_pea4 | 20 | 80 |
| HME_soy5 | 30 | 70 |
| HME_soy6 | 40 | 80 |
| HME_soy7 | 50 | 50 |
| HME_soy8 | 60 | 40 |

**Table 3. Soy formulas for HME with liquid yeast biomass. (DM=Dry matter)**

| | % Liquid yeast | % recipe soy |
|---|---|---|
| HME_wetb1 | 70 | 11,31 |
| HME_wetb2 | 66 | 14,03 |

**Table 4. Pea formulas for HME with liquid yeast biomass. (DM=Dry matter)**

| | % Liquid yeast | % recipe pea |
|---|---|---|
| HME_wetb2 | 23,89 | 23,89 |
| HME_wetb4 | 22,97 | 22,97 |

### Example 1.2.2. Low moisture extrusion (LME)

All extrusion experiments were performed using a LME 1 ZSK27 doble screw extruder (Cooperion) with ten independent heating zones. Yeast powders were added respectively with Soy protein concentrate at concentrations of 0-30%. Yeast powders were added with pea protein isolate at concentrations of 0-60%. The mixed material powder blend was fed to extruder at rate 15 kg/h. Water was pumped to the extruder. All trials were operated at screw speed of 480-600 rpm. The heating in the different screw zones were between 40-190°C. The cooling die was then opened for samples to be collected at temperature between 40-85°C. Then the extrudates were dried at 80°C in an oven.

**Table 5. Soy formulas for LME. (DM=Dry matter)**

| | % DM yeast powder | % DM soy |
|---|---|---|
| LME_soy1 | 15 | 85 |
| LME_soy2 | 20 | 80 |
| LME_soy3 | 30 | 70 |

**Table 6. Pea formulas for LME. (DM=Dry matter)**

| | % DM yeast powder | % DM pea |
|---|---|---|
| LME_pea1 | 0 | 39,95 |
| LME_pea2 | 5 | 37,6 |
| LME_pea3 | 15 | 32,9 |

### Example 1.3. Sensory analysis

### Example 1.3.1. Discrimination sensory test

A discrimination sensory test was conducted with a tasting panel comprising 12 trained panellists. The formulas selected for this test were HME_soy1, HME _soy2, HME_soy3, HME _soy4, HME_pea1, HME_pea2, HME_pea3 and HME_pea4. The panellists were instructed to evaluate and record the soy-like and pea-like notes, specifically distinguishing between samples containing only soy or pea and those containing soy or pea along with yeast. Additionally, they assessed the umami taste of each sample. The evaluations were carried out using established sensory evaluation techniques, ensuring consistency and reliability in the data collection process.

### Example 1.3.2. Qualitative Descriptive Analysis (QDA)

A Qualitative Descriptive Analysis (QDA) was performed to discern differences between samples containing pea alone versus those containing pea along with yeast. The formulas selected for this test were HME_ pea1 and HME_ pea4. This analysis aimed to establish a detailed sensory profile for each sample and compare the sensory attributes between them. Sixteen expert tasters comprised the panel for this evaluation.

### Example 1.4. Analysis of odour zones of the extrudate

Formulas HME_ pea1 and HME_ pea4 were selected to perform the odour zone analysis.

### Example 1.4.1. Dynamic Headspace technique coupled with Solid-Phase Extraction (HS-SPE)

First step for characterizing aroma profiles is acquisition of representative odor extracts from samples. In this study, we employed a dynamic headspace technique coupled with solid-phase extraction (HS-SPE) to achieve this goal. The optimization process involved determining the appropriate purging time and sample quantity to ensure sufficient aromatic potency. Samples, each comprising 100 grams of product, were prepared by cutting the extrudate into 1x1 cm squares and introduced into the device under nitrogen gas flow. The gas stream facilitated the release of volatile compounds from the samples, which were then trapped onto a solid-phase extraction cartridge. Following optimization, the trapped compounds were eluted from the cartridge using ether, and each extract was concentrated to 200 µL for subsequent analysis.

### Example 1.4.2. Gas Chromatography with Olfactometric detection (GC-O-FID)

For the olfactometric analysis of the extracts to obtain the aroma profile of the samples, we conducted an evaluation to identify the aromatic zones defining them and hierarchize the detected odors in each. The panel comprised six judges, with extensive experience in olfactometric assessment. In the procedure, 3 µL of the concentrated extract were analysed by gas chromatography (Column: DB-WAX) with olfactometric detection and FID detector (GC-O-FID), using a worksheet to record, for each perceived odor, the time, description, and intensity on a scale from 0.5 to 3 points. Data treatment involved calculating the modified frequency (MF) for each odor zone, considering the fraction of panelists detecting the aroma and their attributed intensities, according to Dravnieks' formula. Additionally, the linear retention index (RI), characterizing each odor zone based on its retention time under specific chromatographic conditions, was calculated to further characterize the compounds.

### Example 2. Results

### Example 2.1. Preparation of the extrudates

### Example 2.1.1. High moisture extrusion

High moisture extrudates (HME) were obtained successfully using a yeast material as a co-ingredient together with different plant proteins. **Tables 7, 8 and 9** represent different yeast material and plant proteins used for the formulation. Respectively it is shown the protein concentration coming from the yeast material in each recipe.

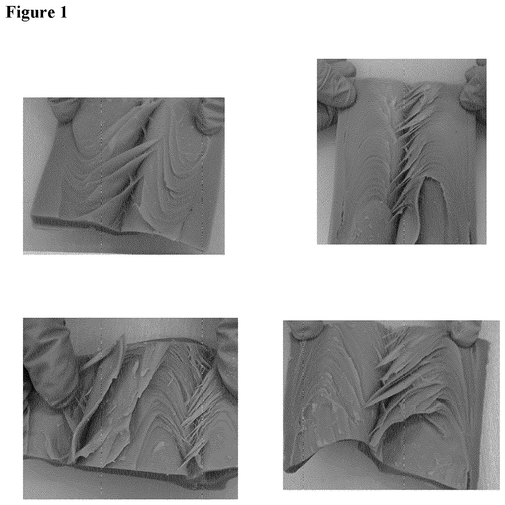

Through photography, a visual examination of the samples was conducted, focusing on their structural characteristic (see **Figure 1** as an example). Overall, the images captured revealed a fiber-like structure present in the formulations with and without yeast material formulations. Surprisingly, the introduction of yeast material did not impact the fiber structure of the samples. This indicates that the addition of yeast does not visibly alter the physical appearance of the product at a macroscopic level. The consistent fiber-like morphology observed across all samples suggests a stable structural integrity, which could have implications for product texture, stability, and overall consumer perception. Further exploration into the impact of yeast incorporation on the macroscopic properties of the formulations may provide valuable insights for product development and optimization.

Surprisingly, the yeast biomass, when added in liquid format, exhibited the same fiber-like structure observed in both with and without yeast material formulations. The preservation of the fiber-like structure in samples containing liquid yeast biomass suggests a remarkable stability in structural integrity, regardless of the physical state of the yeast. This unexpected outcome presents significant advantages from a sustainability perspective, as it eliminates the need for energy-intensive drying steps during processing. Overall, these results highlight the potential of liquid yeast biomass as a sustainable alternative in food processing, offering structural stability without compromising environmental sustainability.

**Table 7. Soy HME formula overview. DM: Dry Matter**

| | % DM yeast powder | % yeast recipe | % DM soy | % Soy recipe | % protein coming from yeast |
|---|---|---|---|---|---|
| HME_soy1 | 0 | 0 | 100 | 36 | 0 |
| HME_soy2 | 5 | 1,8 | 95 | 34,2 | 0,72 |
| HME_soy3 | 15 | 5,55 | 85 | 31,45 | 2,22 |
| HME_soy4 | 20 | 7,6 | 80 | 30,4 | 3,04 |

**Table 8. Pea HME formula overview. DM: Dry Matter**

| | % DM yeast powder | % MOA recipe | % DM pea | % Pea recipe | % protein coming from yeast |
|---|---|---|---|---|---|
| HME_pea1 | 0 | 0 | 100 | 43 | 0 |
| HME_pea2 | 5 | 2,3 | 95 | 43,7 | 0,92 |
| HME_pea3 | 10 | 4,6 | 90 | 41,4 | 1,84 |
| HME_pea4 | 15 | 7,2 | 85 | 40,8 | 2,88 |

**Table 9. Soy HME formula with wet biomass overview. DM: Dry Matter**

| | % Yeast liquid biomass | % DM soy | % recipe soy | % protein coming from yeast |
|---|---|---|---|---|
| HME_wetb1 | 70 | 30 | 11,31 | 3,08 |
| HME_wetb2 | 66 | 34 | 14,03 | 2,904 |

**Table 10. Pea HME formula with wet biomass overview. DM: Dry Matter**

| | % Yeast liquid biomass | % DM pea | % recipe pea | % protein coming from yeast |
|---|---|---|---|---|
| HME_wetb3 | 54 | 46 | 23,89 | 2,376 |
| HME_wetb4 | 55 | 45 | 22,97 | 2,42 |

### Example 2.1.2. Low moisture extrusion

Yeast ingredient was also used as co-ingredient in Low moisture extrudates (LME). Several extrudates were obtained from different plant protein sources with a correct fiber structure.

Low moisture extrudates (LME) were obtained successfully using a yeast material as a co-ingredient together with different plant proteins. **Table 11** and **Table 12** represent different yeast material and plant proteins used for the formulation. Respectively it is shown the protein concentration coming from the yeast material in each recipe.

**Table 11. Soy LME formula overview. DM: Dry Matter**

| | % DM yeast powder | % MOA recipe | % DM soy | % soy recipe | % protein coming from yeast |
|---|---|---|---|---|---|
| LME_soy1 | 0 | 0 | 100 | 95,00 | 0 |
| LME_soy2 | 15 | 14,25 | 85 | 80,75 | 2,82 |
| LME_soy3 | 20 | 19 | 80 | 76,00 | 3,76 |
| LME_soy4 | 30 | 28,5 | 70 | 66,50 | 5,64 |

**Table 12. Pea LME formula overview. DM: Dry Matter**

| | % DM yeast powder | % MOA recipe | % DM pea | % pea recipe | % protein coming from yeast |
|---|---|---|---|---|---|
| LME_pea1 | 0 | 0 | 100 | 95,00 | 0 |
| LME_pea2 | 15 | 14,25 | 85 | 80,75 | 2,82 |
| LME_pea3 | 20 | 19 | 80 | 76,00 | 3,76 |
| LME_pea4 | 30 | 28,5 | 70 | 66,50 | 5,64 |

### Example 2.2. Sensory analysis

### Example 2.2.1. Descriptive sensory test

The descriptive sensory test revealed that as the yeast content in the HME (High Moisture Extrusion) formulas increased, there was a reduction in the plant-based protein-like flavor, while simultaneously witnessing an increase in umami flavor.

The descriptive sensory test revealed that as the yeast content in the LME (Low Moisture Extrusion) formulas increased, there was a reduction in the plant-based "legume" notes, "green" notes and "cardboard" notes, while simultaneously witnessing an increase in umami flavor.

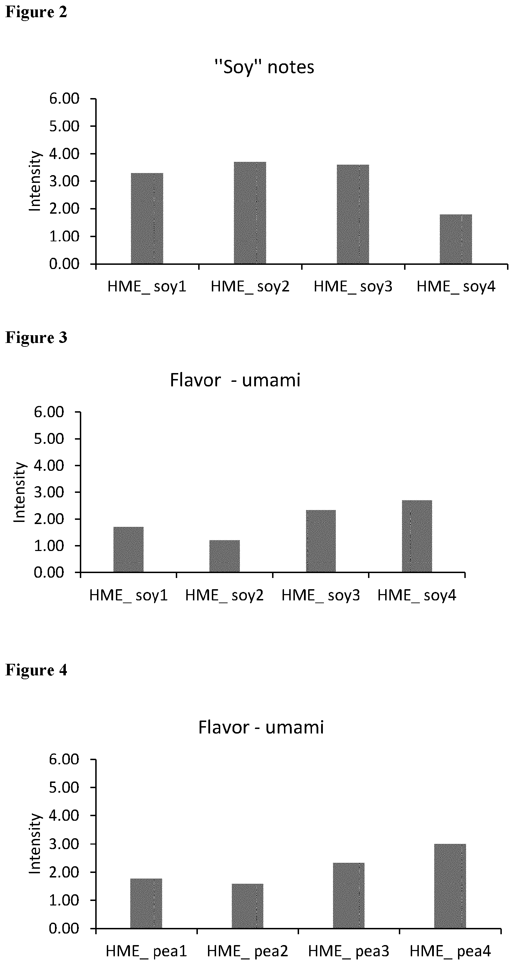

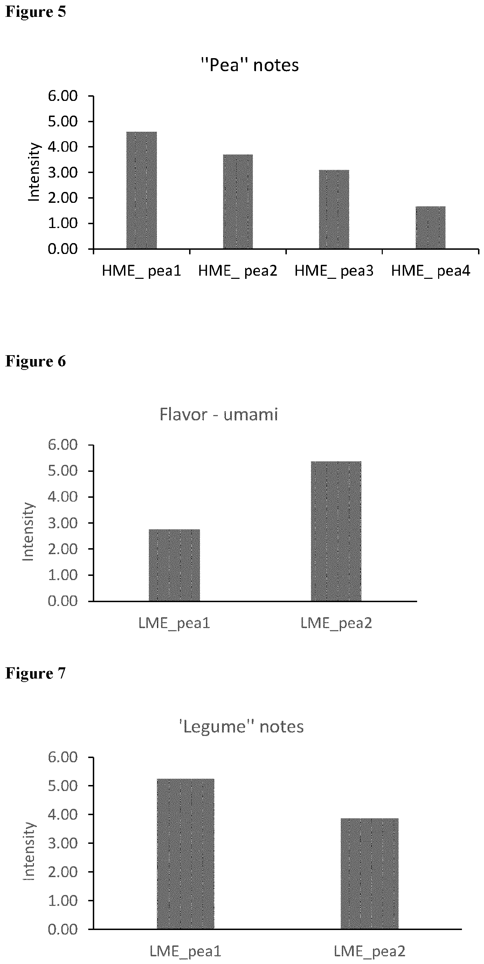

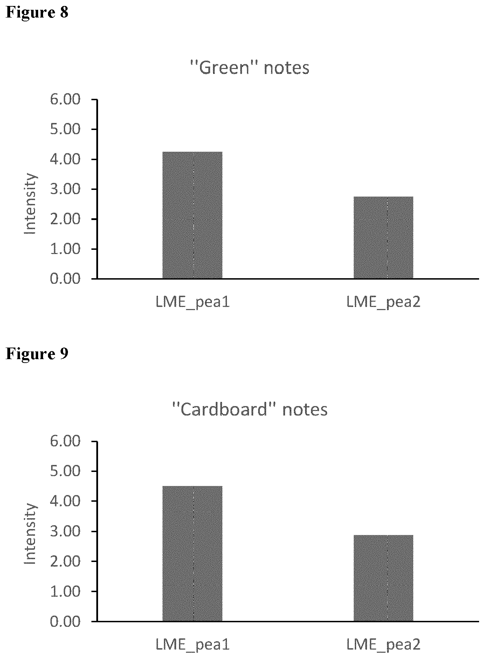

**Figures 2-9** provide visual representations of these trends, highlighting the inverse relationship between yeast content and plant-based protein related notes, as well as the positive correlation with umami taste. These results suggest that yeast content plays a crucial role in modulating the sensory characteristics of HME and LME formulas, impacting both flavor profiles. Such insights are invaluable for optimizing product formulations and enhancing overall consumer acceptance.

### Example 2.2.2. Qualitative Descriptive Analysis (QDA)

Analysis revealed significant differences between the samples in terms of "legume flavor intensity". This intensity notably decreased by approximately 35% with the addition of the yeast biomass to the product. Additionally, reductions were observed in the intensity of "green notes," "undesirable flavors," "rancid flavor," and "cardboard/cardboardy flavor," **Table 13** presents the mean values for each descriptor in both samples.

**Table 13. Mean values obtained for each sample and for each attribute assessed.**

| **Descriptors** | HME_pea1 | HME_pea4 |
|---|---|---|
| | Mean | Mean |
| Overall odour intensity | 3,89 | 4,44 |
| Base characteristic odour intensity | 5,24 | 4,03 |
| Intensity of "undesirable odours". | 1,59 | 0,92 |
| Overall flavour intensity | 4,77 | 5,28 |
| Base characteristic flavour intensity | 4,64 | 2,66 |
| Umami flavour intensity | 2,95 | 4,80 |
| Legume flavour intensity | 4,69 | 3,04 |
| Green notes" flavour intensity | 2,13 | 0,62 |
| Rancid flavour intensity | 2,23 | 1,08 |
| cardboard/cardboard' flavoue intensity | 2,85 | 1,32 |
| Undesirable flavour intensity | 2,66 | 1,32 |

### Example 2.3. Analysis of odour zones of the extrudate

The odor zones characterizing the protein extrudate samples were determined using linear retention indices (RI), modified frequency (%MF), and odor descriptors provided by the judges. These data were used to compile a table of odor zones, with the resulting information presented in **Table 14.**

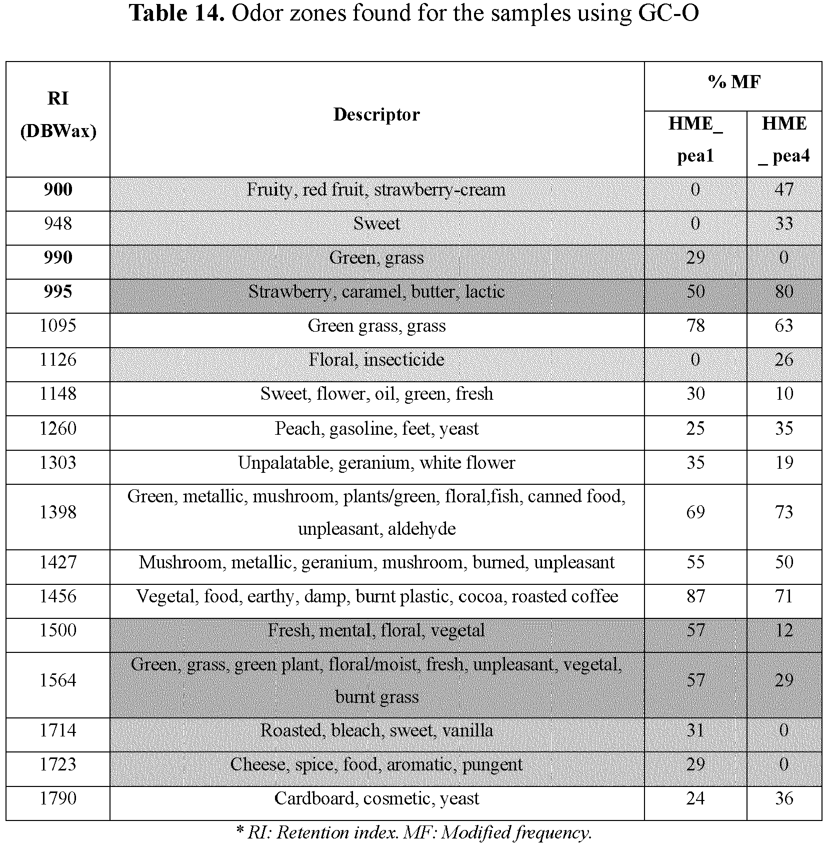

Seventeen distinct odor zones were identified across both samples (although this does not necessarily equate to 17 different compounds, as some odor zones may result from combinations of multiple compounds).

**Table** 15 presents the results as differences between %MF observed in the HME pea_4 sample containing yeast biomass minus the %MF in the HMEpea _1 sample, ordered by the magnitude of these differences. Three distinct groups of attributes are observed, with some increasing or appearing in the MOA sample, some decreasing or disappearing, and an intermediate group shared between the samples.

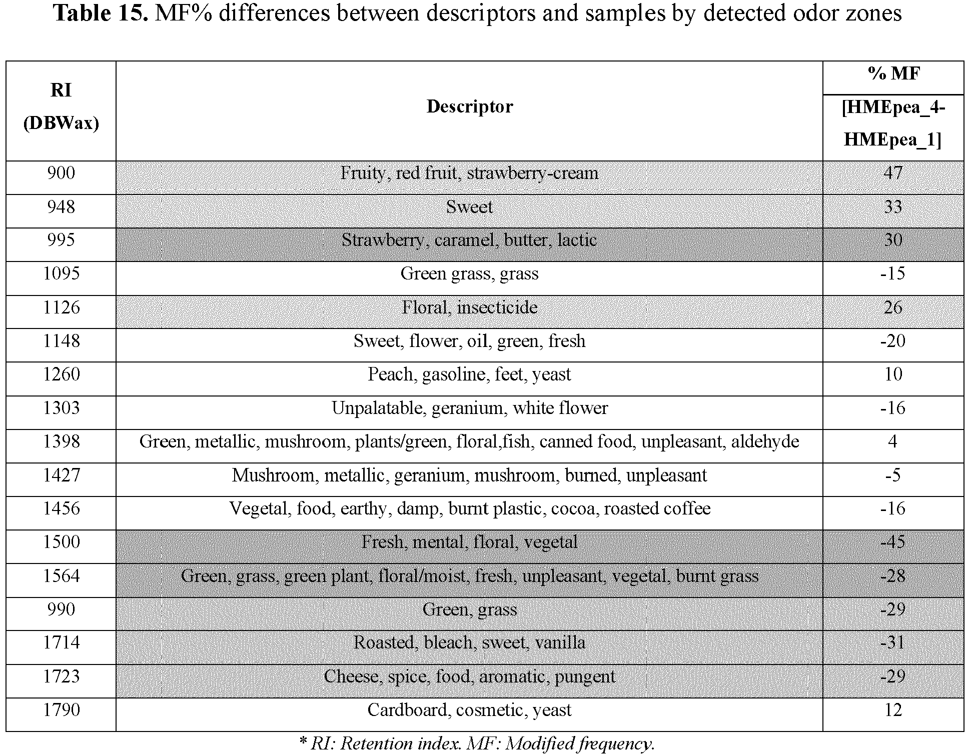

Further analysis reveals the following key findings:
Samples primarily differentiate based on increased intensity of **RI 900 and RI 995 zones** (characterized as sweet, red fruit, strawberry, caramel aromas) in the HMEpea_4 sample, alongside a decrease in **RI 990** (green, grass) intensity.

Differences are observed for the RI 900, RI 948, and RI 1126 zones, appearing exclusively in the HMEpea _4 sample, as well as an increase observed in the RI 995 zone. These odor zones may explain an increase in sweet notes, either due to their appearance or masking of green notes, this could potentially characterize the HMEpea _4 sample.

Additionally, the HMEpea_4 sample exhibits a decrease in compounds of RI 1500 and 1564 (green aromas) and a disappearance of unpleasant notes associated with RI 990, 1714, and 1723 zones compared to the HMEpea_1 sample. This decrease in notes may relate to the reduction of green notes in HMEpea_1 compared to HMEpea _4, consistent with sensory evaluation results obtained in the QDA.

Further analysis of %MF values in each sample **(Table 16)** reveals that, despite similar total intensities (656 versus 584), representing a loss of approximately 10% of the total aroma intensity when using the HMEpea_4 formula versus 100% HMEpea_1, basic differences lie in the significant loss of negative tones, particularly "green" notes (more than 36% loss) and "unpleasant" notes associated with the HMEpea_1 sample, and a substantial increase (over 200%) in the more "fruity and sweet" notes characteristic of HMEpea_4. These results align with those found in the QDA, particularly regarding "green" and unpleasant ("legume, green/herbaceous, undesirable, cardboard/cardboard-like") aromas.

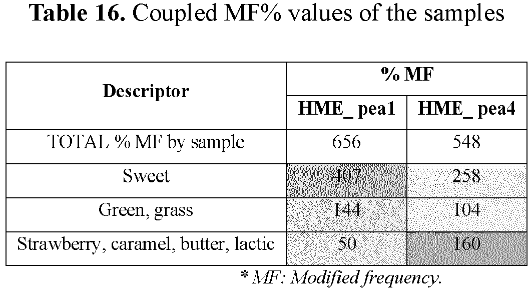

Overall, our findings highlight the importance of yeast content as a key determinant of sensory characteristics in HME products. By manipulating yeast levels, manufacturers can tailor flavor profiles to meet consumer preferences and enhance product acceptance.

## Claims

1. Process for obtaining plant-based meat without plant flavour off-notes, or with reduced plant flavour off-notes as compared with the plant of origin, which comprises:
a. Providing a source of plant protein,
b. Extruding a mixture of the plant protein with yeast biomass,
wherein the process is **characterized in that** the yeast biomass of step b) is inactivated yeast biomass and **in that** fermentation or extraction steps are not carried out.

2. Process for mitigating or eliminating plant flavour off-notes in meat analogues which comprises:
a. Providing a source of plant protein,
b. Extruding a mixture of the plant protein with yeast biomass,
wherein the process is **characterized in that** the yeast biomass of step b) is inactivated yeast biomass and fermentation or extraction steps are excluded.

3. Use of inactivated yeast biomass for obtaining plant-based meat without plant flavour off-notes; or for mitigating or eliminating plant flavour off-notes in meat analogues.

4. Process according to claims 1 or 2, or use according to claim 3, wherein the yeast is inactivated through processes like heat treatment or drying.

5. Process according to claims 1 or 2, or use according to claim 3, **characterized in that** the yeast biomass is added in liquid format.

6. Process according to claims 1 or 2, or use according to claim 3, wherein the plant-based meat is **characterized by** a statistically significant increase of Retention Index (RI) 900, 948, 995 and/or 1126 and a statistically significant decreased of RI 1500, 1564, 990, 1714 and/or 1723 measured by gas chromatography using DBWax column.

7. Process according to claims 1 or 2, or use according to claim 3, wherein the yeast is Crabtree-negative yeast, preferably selected from: *Candida utilis, Kluyveromyces marxianus, Debaryomyces hansenii* or *Yarrowia lipolytica.*

8. Plant-based meat obtained by the process of claims 1, 2, 4, 5 or 6.

9. Plant-based meat, according to claim 8, **characterized by** a statistically significant increase of Retention Index (RI) 900, 948, 995 and/or 1126 and a statistically significant decreased of RI 1500, 1564, 990, 1714 and/or 1723 measured by gas chromatography using DBWax column.
